(19) Europäisches Patentamt
European Patent Office
Office européen des brevets

(11) **EP 2 145 103 B1**

(12) **EUROPÄISCHE PATENTSCHRIFT**

(45) Veröffentlichungstag und Bekanntmachung des Hinweises auf die Patenterteilung:
**02.04.2014 Patentblatt 2014/14**

(21) Anmeldenummer: **08749808.5**

(22) Anmeldetag: **28.04.2008**

(51) Int Cl.:
**F03D 7/04** (2006.01)

(86) Internationale Anmeldenummer:
**PCT/EP2008/055186**

(87) Internationale Veröffentlichungsnummer:
**WO 2008/138738 (20.11.2008 Gazette 2008/47)**

(54) **VERFAHREN ZUM BETRIEB EINES WINDPARKS MIT EINER MEHRZAHL VON WINDKRAFTANLAGEN**

METHOD FOR OPERATING A WIND FARM COMPRISING A PLURALITY OF WIND TURBINES

PROCÉDÉ PERMETTANT DE FAIRE FONCTIONNER UNE CENTRALE ÉOLIENNE COMPRENANT UNE PLURALITÉ D'ÉOLIENNES

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **15.05.2007 DE 102007022705**

(43) Veröffentlichungstag der Anmeldung:
**20.01.2010 Patentblatt 2010/03**

(73) Patentinhaber: **Siemens Aktiengesellschaft
80333 München (DE)**

(72) Erfinder:
• **EGEDAL, Per
7400 Herning (DK)**
• **ENEVOLDSEN, Peder, Bay
7100 Vejle (DK)**
• **GREINER, Martin
85630 Neukeferloh (DE)**
• **HJORT, Søren
7330 Brande (DK)**
• **CLEVE, Jochen
1416 Kobenhavn (DK)**
• **MEYER, Esther
91052 Erlangen (DE)**

(56) Entgegenhaltungen:
**EP-A- 1 672 778      EP-A- 1 739 824
WO-A-03/008802      US-A1- 2007 090 651**

**Beschreibung**

Die Erfindung betrifft ein Verfahren und eine Vorrichtung zum Betrieb eines Windparks mit einer Mehrzahl von Windkraftanlagen.

In Windparks wird mit Hilfe von Windkraftanlagen in der Form von Windturbinen kinetische Windenergie in elektrische Leistung umgewandelt. Bei herkömmlichen Windparks werden die Einzelleistungen der einzelnen Windkraftanlagen erfasst, und Betriebsparameter der Windkraftanlagen, insbesondere der Neigungswinkel der Rotorblätter der einzelnen Turbinen, werden derart eingestellt, dass jede Einzelleistung für sich optimiert ist, d.h. bei vorgegebenen Windverhältnissen einen Maximalwert aufweist.

Aus der Druckschrift DE 10 2005 033 229 A1 ist ein Netzwerk zur Steuerung von Windkraftanlagen bekannt, wobei an den Windkraftanlagen für Messzwecke Sensoren vorgesehen sind und die Sensorwerte einer Windkraftanlage über ein entsprechendes Netz an andere Windkraftanlagen übertragen werden. Mit Hilfe der Sensorwerte können Betriebsparameter, beispielsweise die Einstellung der Neigung der Rotorblätter, gesteuert werden kann.

Bekannte Verfahren zum Betrieb eines Windparks steuern die Betriebsparameter der einzelnen Windkraftanlagen unabhängig voneinander, ohne zu überprüfen, ob die Einstellung der Betriebsparameter jeder einzelnen Windkraftanlage auf einen maximalen Leistungswert auch tatsächlich die beste Gesamtleistung des Windparks erzeugt.

Die Druckschrift WO 03/008802 A1 offenbart ein Verfahren zur drehzahlstellbaren leistungselektronischen Regelung einer getriebelosen Windkraftanlage, in dem zwischen einem Regel- bzw. Betriebsmodus mit variablen Rotor- bzw. Turbinendrehzahlen und einem Regel- bzw. Betriebsmodus mit fest vorgegebenen Drehzahlen umgeschaltet werden kann.

In der Druckschrift EP 1 672 778 A2 ist ein Verfahren zum Betrieb eines Windparks beschrieben, in dem die Rate der Veränderung der Leistungsabgabe des Windparks überwacht und gesteuert wird.

In der Druckschrift EP 1 739 824 A2 wird ein Verfahren zur Steuerung der Leistungsabgabe eines Windparks beschrieben, in dem der Energieverbrauch eines elektrisch mit dem Windpark gekoppelten Elektrolyseurs verändert wird.

In dem Dokument US 2007/0090651 A1 ist ein Windpark offenbart, dessen erzeugte Leistung in Abhängigkeit von der Netzfrequenz des elektrischen Energienetzes geregelt wird.

Aufgabe der Erfindung ist es, ein Verfahren zum Betrieb eines Windparks zu schaffen, mit dem die ausgegebene elektrische Gesamtleistung des Windparks verbessert wird.

Diese Aufgabe wird durch die unabhängigen Patentansprüche gelöst. Weiterbildungen der Erfindung sind in den abhängigen Ansprüchen definiert.

In dem erfindungsgemäßen Verfahren werden während des Betriebs des Windparks Betriebsparameter der Windkraftanlagen des Windparks gemäß einem Optimierungsziel eingestellt, wobei das Optimierungsziel der Maximalwert der aus der Summe aller Einzelleistungen der Windkraftanlagen gebildeten Gesamtleistung des Windparks ist. Dieses Optimierungsziel ist für Windparks nicht bekannt. Bei Windparks gemäß dem Stand der Technik wird nämlich immer eine Einzeloptimierung der Einzelleistungen der Windkraftanlagen vorgenommen, ohne zu berücksichtigen, dass ggf. durch nicht optimale Einstellungswerte einzelner Windkraftanlagen dennoch eine verbesserte Gesamtleistung erreicht werden kann.

Erfindungsgemäß ist das Optimierungsziel gegeben durch eine Optimierung der Windgeschwindigkeits-Verhältnisse der Windkraftanlagen, wobei das Windgeschwindigkeits-Verhältnis einer jeweiligen Windkraftanlage gegeben ist durch das Verhältnis der zentralen Windgeschwindigkeit (d.h. der Windgeschwindigkeit im Zentrum des Rotors der jeweiligen Windkraftanlage) unmittelbar nach der jeweiligen Windkraftanlage zu der zentralen Windgeschwindigkeit unmittelbar vor der jeweiligen Windkraftanlage. Vorzugsweise wird das Windgeschwindigkeits-Verhältnis einer jeweiligen Windkraftanlage über den Neigungswinkel der Rotorblätter der jeweiligen Windkraftanlage eingestellt, wobei die Abhängigkeit des Neigungswinkels von dem Windgeschwindigkeits-Verhältnis für jede Windkraftanlage vorbekannt ist bzw. auf einfache Weise bestimmt werden kann.

Im erfindungsgemäßen Verfahren wird ein linearer Windpark betrieben, der eine oder mehrere parallele Reihen von hintereinander angeordneten, insbesondre baugleichen Windkraftanlagen aufweist. Dabei ist das Optimierungsziel bei vorgegebener Windgeschwindigkeit parallel zu den Reihen der hintereinander angeordneten Windkraftanlagen gegeben durch die Maximalleistungen der Reihen von hintereinander angeordneten Windkraftanlagen. Hierbei wird die Tatsache berücksichtigt, dass bei einem parallel zu den Reihen einfallenden Wind keine Beeinflussung der Windkraftanlagen von verschiedenen Reihen erfolgt, so dass für jede Reihe einzeln eine Optimierung im Hinblick auf die Maximalleistung aller Windkraftanlagen in der Reihe vorgenommen werden kann.

Im erfindungsgemäßen Verfahren wird die Maximalleistung einer jeweiligen Reihe von hintereinander angeordneten Windkraftanlagen durch Optimierung der Windgeschwindigkeits-Verhältnisse der jeweiligen Windkraftanlagen einer Reihe gemäß folgender Gleichung bestimmt:

$$\{q_i\}_{opt} = \arg\max\left(\sum_{i=1}^{N} P_i(q_i|v_i)\right)$$

wobei N die Anzahl von Windkraftanlagen in einer Reihe ist und die Windkraftanlagen in einer Reihe in Windrichtung in aufsteigender Reihenfolge nummeriert sind;

wobei $q_i$ das Verhältnis der zentralen Windgeschwindigkeit unmittelbar nach der i-ten Windkraftanlage zur zentralen Windgeschwindigkeit $v_i$ unmittelbar vor der i-ten Windkraftanlage ist;

wobei $P_i(q_i|v_i)$ die Einzelleistung der i-ten Windkraftanlage in Abhängigkeit von dem Windgeschwindigkeitsverhältnis $q_i$ bei gegebener zentraler Windgeschwindigkeit $v_i$ unmittelbar vor der i-ten Windkraftanlage ist.

Der Erfindung liegt insbesondere die Erkenntnis zu Grunde, dass sich in Windparks die einzelnen Windkraftanlagen gegenseitig beeinflussen, insbesondere beeinflusst die Nachlaufströmung einer Windkraftanlage die Windverhältnisse der dahinter liegenden Windkraftanlage. Es wurde erfindungsgemäß erkannt, dass aufgrund dieser Wechselwirkungen die beste Gesamtleistung eines Windparks nicht durch die Einstellung der einzelnen Betriebsparameter der Windkraftanlagen auf einen Maximalwert der Einzelleistungen erreicht wird, sondern dass bessere Gesamtleistungswerte dann erreicht werden, wenn die Optimierung im Hinblick auf den Maximalwert der Summe aller Einzelleistungen erfolgt.

In einer bevorzugten Ausführungsform des erfindungsgemäßen Verfahrens umfassen die Betriebsparameter, welche gemäß dem Optimierungsziel eingestellt werden, die jeweiligen Neigungswinkel der Rotorblätter der einzelnen Windkraftanlagen. Die Neigungswinkel der Rotorblätter legen die Nachlaufströmung der einzelnen Windkraftanlagen fest und sind deshalb die bevorzugten Parameter, über welche Veränderungen in der Gesamtleistung des Windparks erreicht werden können.

In einer weiteren Ausführungsform des erfindungsgemäßen Verfahrens werden während des Betriebs des Windparks die jeweiligen Einzelleistungen der Windkraftanlagen erfasst und die Neigungswinkel der Rotorblätter in Rückkopplung mit den erfassten Einzelleistungen gemäß dem Optimierungsziel eingestellt. Bei diesem Verfahren wird ein besonders guter Realbetrieb des Windparks gewährleistet, da bei der Einstellung des Optimierungsziels auch immer die real vorliegenden Einzelleistungen berücksichtigt werden. Hierdurch können bessere Ergebnisse erreicht werden, als wenn das Optimierungsziel nur durch theoretische Berechnungen ohne Berücksichtigung des Realbetriebs festgelegt wird.

Vorzugsweise ist die Leistung $P_i(q_i|v_i)$ durch folgende Gleichung gegeben:

$$P_i(q_i|v_i) = \frac{\rho}{2}\pi R^2 v_i^3 \frac{(1+q_i)(1-q_i^2)}{2}$$

wobei $\rho$ die Luftdichte ist und R der Radius des Rotors der i-ten Windkraftanlage ist und wobei $v_i$ die zentrale Windgeschwindigkeit unmittelbar vor der i-ten Windkraftanlage ist.

Der obige Zusammenhang ist dem Fachmann auf dem Gebiet der Winderzeugung hinlänglich bekannt und kann in dem erfindungsgemäßen Verfahren zur rechnergestützten Bestimmung der Einzelleistung $P_i$ einer Turbine verwendet werden.

In einer besonders bevorzugten Ausführungsform des erfindungsgemäßen Verfahrens wird die zentrale Windgeschwindigkeit $v_i$ unmittelbar vor der i-ten Windkraftanlage mit Hilfe der folgenden Formel bestimmt:

$$\pi\left((R + x\tan\alpha)^2 - R^2\right)v_{i-1}^* + \pi R^2 q_{i-1}v_{i-1} = \pi(R + x\tan\alpha)^2 v_i, \qquad (i \geq 2)$$

wobei R der Radius des Rotors der (i-1)-ten Windkraftanlage ist;

wobei x der Abstand der (i-1)-ten Windkraftanlage zur i-ten Windkraftanlage ist;

wobei $v_{i-1}^*$ die periphere Windgeschwindigkeit am Rand des Rotors der (i-1)-ten Windkraftanlage ist;

wobei $\alpha$ der Neigungswinkel der Nachlaufströmung der (i-1)-ten Windkraftanlage ist.

Der Neigungswinkel $\alpha$ ist eine für eine jeweilige Windkraftanlage fest vergebene Größe.

Die oben definierte periphere Windgeschwindigkeit $\overset{\bullet}{v}_{i-1}$ wird hierbei durch einen Wert abgeschätzt, der zwischen der zentralen Windgeschwindigkeit $v_{i-1}$ unmittelbar vor dem Zentrum des Rotors der (i-1)-ten Windkraftanlage und der zentralen Windgeschwindigkeit $v_1$ unmittelbar vor dem Zentrum des Rotors der ersten Windkraftanlage liegt.

In einer weiteren, bevorzugten Ausführungsform der Erfindung werden die Betriebsparameter gemäß dem Optimierungsziel mit Hilfe eines numerischen Verfahrens, insbesondere eines Gradienten-Verfahrens, bestimmt.

In einer Ausgestaltung des erfindungsgemäßen Verfahrens werden für eine vorgegebene Anzahl an Referenz-Windbedingungen die Betriebsparameter gemäß dem Optimierungsziel vorab vorgegeben. Bei der Einstellung der Betriebsparameter wird hierbei vorzugsweise künstliche Intelligenz verwendet, insbesondere in der Form eines künstlichen neuronalen Netzes und/oder eines probabilistischen Netzes (z.B. eines Bayesianisches Netzes). Das künstliche neuronale Netz bzw. das probabilistische Netz sind hierbei mit den Betriebsparametern für die vorgegebene Anzahl an Referenz-Windbedingungen gelernt. Auf diese Weise können mit dem Verfahren für beliebige Windbedingungen, welche von den Referenz-Bedingungen abweichen, immer optimale Betriebsparameter für eine maximale Gesamtleistung des Windparks errechnet werden.

Neben dem oben beschriebenen Verfahren umfasst die Erfindung ferner eine Vorrichtung zum Betrieb eines Windparks mit einer Mehrzahl von Windkraftanlagen, wobei die Vorrichtung eine Steuereinheit beinhaltet, mit der Betriebsparameter der Windkraftanlage in Abhängigkeit von einem Optimierungsziel einstellbar sind, wobei das Optimierungsziel der Maximalwert der aus der Summe aller Einzelleistungen der Windkraftanlagen gebildeten Gesamtleistung des Windparks ist. Diese Vorrichtung ist derart ausgestaltet, dass ein Betrieb des Windparks gemäß dem oben beschriebenen erfindungsgemäßen Verfahrens möglich ist.

In einer bevorzugten Ausgestaltung umfasst die erfindungsgemäße Vorrichtung ein Netz, insbesondere ein drahtgebundenes Netz und/oder drahtloses Netz, über das die Steuereinheit mit den Windkraftanlagen verbunden ist, wobei über das Netz Steuerbefehle zur Einstellung der Betriebsparameter der Windkraftanlagen an die Windkraftanlagen übertragen werden. Vorzugsweise können über das Netz ferner Werte der Einzelleistungen der Windkraftanlagen an die Steuereinheit gemeldet werden.

Die Erfindung betrifft darüber hinaus einen Windpark mit einer Mehrzahl von Windkraftanlagen, welche die soeben beschriebene Vorrichtung zum Betrieb des Windparks umfasst.

Ausführungsbeispiele der Erfindung werden nachfolgend anhand der beigefügten Figuren detailliert beschrieben.

Es zeigen:

Fig. 1       eine schematische Darstellung eines linearen Windparks mit hintereinander angeordneten Windkraftanlagen, welcher mit einer Ausführungsform des erfindungsgemäßen Verfahrens betrieben wird;

Fig. 2       ein Diagramm, welches für einen linearen Windpark aus fünf hintereinander angeordneten Windkraftanlagen die Einstellungen von Windgeschwindigkeits-Verhältnissen der einzelnen Windkraftanlagen auf der Basis eines Verfahrens gemäß dem Stand der Technik sowie auf der Basis von zwei erfindungsgemäßen Ausgestaltungen von Betriebsverfahren wiedergibt; und

Fig. 3 und 4       Diagramme, welche für zwei Ausgestaltungen des erfindungsgemäßen Verfahrens jeweils die Wirkungsgrade des erfindungsgemäßen Verfahrens mit einem Verfahren gemäß dem Stand der Technik vergleichen.

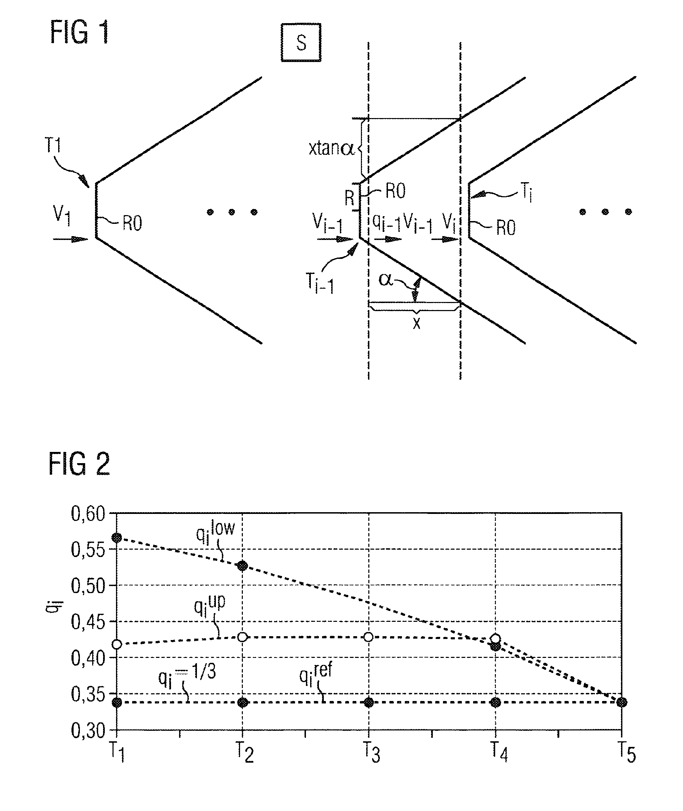

In Fig. 1 ist schematisiert in Draufsicht ein Windpark mit einer Vielzahl von Windkraftanlagen $T_1, ..., T_{i-1}, T_i, ...$ in der Form von einzelnen baugleichen Generatorturbinen gezeigt, welche mit konstantem Abstand x voneinander beabstandet sind und durch einen entsprechenden Frontalwind mit der Geschwindigkeit $v_1$ angetrieben werden. Die Richtung des Windes ist hierbei senkrecht zu der Ausdehnung der durch mehrere Rotorblätter gebildeten Rotoren RO der Windkraftanlagen, wobei der Radius der einzelnen Rotorblätter mit R bezeichnet ist. Darüber hinaus ist in Fig. 1 der Neigungswinkel $\alpha$ der Nachlaufströmung hinter der Turbine $T_{i-1}$ dargestellt. Der Bereich der Nachlaufströmung, der außerhalb des Querschnitts des Rotors RO liegt, ergibt sich hierbei aus dem Abstand x zwischen den benachbarten Turbinen $T_{i-1}$ und $T_i$ und deckt den radialen Abschnitt $x\tan\alpha$ ab.

In der Darstellung der Fig. 1 ist die Strömung unmittelbar vor der (i-1)-ten Turbine bzw. der i-ten Turbine mit $v_{i-1}$ bzw. $v_i$ bezeichnet. Ferner wird die Strömung unmittelbar hinter der (i-1)-ten Turbine mit $q_{i-1}v_{i-1}$ bezeichnet. Somit gibt der Parameter $q_i$ (i = 1, ..., N) das Verhältnis der Windgeschwindigkeit direkt hinter und direkt vor der i-ten Turbine wieder. Dieses Verhältnis $q_i$ kann über den entsprechenden Neigungswinkel der Rotorblätter einer Turbine gesteuert werden.

Wie bereits im Vorangegangenen dargelegt, werden Betriebsparameter der einzelnen Turbinen in Abhängigkeit von einem Optimierungsziel derart eingestellt, dass die elektrische Gesamtausgangsleistung, welche die Summe der Einzelleistungen aller Turbinen darstellt, maximal ist. In der hier beschriebenen Ausführungsform der Erfindung wird dabei als Betriebsparameter der Neigungswinkel der Rotorblätter verwendet, der über entsprechende Motoren an den Rotorblättern in geeigneter Weise verändert werden kann.

Nachfolgend wird das Optimierungsziel durch optimierte Windgeschwindigkeits-Verhältnisse $q_i$ repräsentiert, wobei $q_i$ wiederum von dem Neigungswinkel der Rotorblätter abhängt. Die optimalen Werte für $q_i$ werden durch ein mathematisches Optimierungsverfahren berechnet. Es können somit vorab durch numerische Simulationen optimierte Windgeschwindigkeits-Verhältnisse $q_i$ und hieraus optimierte Neigungswinkel der Rotorblätter für unterschiedliche Frontalgeschwindigkeiten $v_i$ berechnet werden, so dass die optimierten Neigungswinkel dann im Realbetrieb des Windparks in Abhängigkeit von der gegebenen Windgeschwindigkeit $v_i$ optimal eingestellt werden. Hierzu ist eine entsprechende Steuereinheit S vorgesehen, welche vorzugsweise mit künstlicher Intelligenz versehen ist, um auch für neue Windgeschwindigkeiten, für welche vorab keine optimierten Neigungswinkel berechnet wurden, optimierte Neigungswinkel zu bestimmen. Diese künstliche Intelligenz kann insbesondere durch neuronale Netze bzw. durch probabilistische Netze, wie z.B. Bayesianische Netze, gebildet sein, wobei diese Netze mit optimalen Neigungswinkeln und dazugehörigen Einzelleistungen der Turbinen gelernt sind.

In der hier beschriebenen Ausführungsform des erfindungsgemäßen Verfahrens wird folgender, auf der Bernoulli-Gleichung basierender Zusammenhang zwischen physikalischen Größen der Turbine einer Windkraftanlage verwendet:

$$\pi\left(\left(R + x \tan\alpha\right)^2 - R^2\right)v_{i-1}^* + \pi R^2 q_{i-1} v_{i-1} = \pi\left(R + x \tan\alpha\right)^2 v_i, \quad \left(i \geq 2\right)$$

$$(1).$$

Wie bereits dargelegt, ist R der Radius des entsprechenden Rotorblattes einer Turbine, x der Abstand zwischen zwei benachbarten Turbinen und $\alpha$ der Neigungswinkel der Nachlaufströmung. Ferner repräsentieren $v_i$ und $v_{i-1}$, die zentralen Windgeschwindigkeiten (d.h. die Geschwindigkeiten im Zentrum des jeweiligen Rotors) direkt vor den Turbinen $T_i$ bzw. $T_{i-1}$. $q_{i-1}v_{i-1}$ repräsentiert die zentrale Windgeschwindigkeit direkt hinter der Turbine $T_{i-1}$. $v_{i-1}^*$ beschreibt die Windgeschwindigkeit am äußeren Rand des Rotors der Turbine $T_{i-1}$, wobei folgende zwei Abschätzungen für $v_{i-1}^*$ verwendet werden:

$$v_{i-1}^* = \begin{cases} v_1 & \left(obere\ Absch\ddot{a}tzung\right) \\ v_{i-1} & \left(untere\ Absch\ddot{a}tzung\right) \end{cases}$$

$$(2).$$

Bei der unteren Abschätzung wird angenommen, dass die Geschwindigkeit $v_{i-1}^*$ am Rand des Rotors genauso groß ist wie die Geschwindigkeit $v_{i-1}$ im Zentrum des Rotors unmittelbar vor der Turbine $T_{i-1}$. Diese Abschätzung ist für kleine Abstände x zwischen den einzelnen Turbinen gültig. Bei der oberen Abschätzung wird angenommen, dass die Windgeschwindigkeit $v_{i-1}^*$ am Rand des Rotors sich bereits wieder auf die frontale Windgeschwindigkeit $v_1$ beschleunigt hat. Die untere Abschätzung gilt für Windparks mit großen Abständen x der einzelnen Turbinen zueinander. Der Wert von $v_{i-1}^*$ wird deshalb in Abhängigkeit von der Konfiguration des Windparks zwischen $v_{i-1}$ und $v_1$ derart gewählt, dass die realen Gegebenheiten am Besten wiedergegeben werden. Mit Hilfe der oberen bzw. unteren Abschätzung von $v_{i-1}^*$ können dann folgende Geschwindigkeiten $v_i$ unmittelbar vor dem Zentrum des Rotors der i-ten Windkraftanlage durch Verwendung der Gleichung (1) wie folgt bestimmt werden:

$$v_i = \begin{cases} v_1 \left( 1 - \left( 1 - q_{i-1} \dfrac{v_i - 1}{v_1} \right) \left( \dfrac{R}{R + x \tan \alpha} \right)^2 \right) & (obere\ Absch\ddot{a}tzung) \\[3ex] v_{i-1} \left( 1 - (1 - q_{i-1}) \left( \dfrac{R}{R + x \tan \alpha} \right)^2 \right) & (untere\ Absch\ddot{a}tzung) \end{cases} \qquad (3).$$

Mit Hilfe einer dem Fachmann hinlänglich bekannten Formel zur Beschreibung der Einzelleistung $P_i$ der Turbine $T_i$ kann diese Einzelleistung $P_i$ in Abhängigkeit von der Geschwindigkeit $v_i$ und dem Windgeschwindigkeits-Verhältnis $q_i$ wie folgt geschrieben werden:

$$P_i = \frac{\rho}{2} \pi R^2 v_i^3 \frac{(1 + q_i)(1 - q_i^2)}{2} \qquad (4).$$

In Gleichung (4) repräsentiert $\rho$ die Luftdichte und der Koeffizient $C(q) = (1+q)(1-q^2)/2$ nimmt den Maximalwert bei $q = 1/3$ an. Dies stellt das bekannte klassische Ergebnis zur Optimierung der jeweiligen Einzelleistungen der Turbinen in einem Windpark dar. Die Windgeschwindigkeit $v$ vor der Turbine wird bei diesem Ergebnis auf $v/3$ hinter der Turbine abgebremst. Indem $q_i = 1/3$, $i = 1, ..., N$ für alle Turbinen gewählt wird, ergibt sich hieraus die von dem Windpark erzeugte Gesamtleistung wie folgt:

$$P_{tot}\left( q_i = \frac{1}{3}, i = 1 : N \middle| v_i \right) = \sum_{i=1}^{N} P_i \left( q_i = \frac{1}{3} \middle| v_i \right) \qquad (5).$$

Die Gesamtleistung gemäß Gleichung (5) stellt eine Optimierung der Einzelleistungen der Turbinen dar, ohne dass die Wechselwirkung der durch die Turbinen erzeugten Strömungen untereinander berücksichtigt wird. Die Gesamtleistung ist somit eine "eigennützige" Optimierung für jede Einzelturbine und ein auf der Basis dieser Optimierung ermitteltes Ergebnis wird im Folgenden als Referenzoptimierung bezeichnet. Erfindungsgemäß wurde erkannt, dass diese Referenzoptimierung nicht die beste Gesamtleistung der Summe aller Einzelleistungen der Turbinen liefert und es wurde stattdessen eine Optimierung verwendet, bei der als Optimierungsziel die Gesamtleistung aller Einzelturbinen optimiert wird. Es wird hierbei der Tatsache Rechnung getragen, dass sich die Strömungen der einzelnen Turbinen gegenseitig beeinflussen, so dass das Maximum der Gesamtleistung nicht einfach dadurch bestimmt werden kann, dass die Maxima aller Einzelleistungen der Turbinen ermittelt werden.

Erfindungsgemäß wird nach dem optimalen Satz von Windgeschwindigkeits-Verhältnissen $q_i$ ($i = 1, ..., N$) der N Turbinen gesucht, wobei dieser optimale Satz mathematisch wie folgt dargestellt werden kann:

$$\{ q_i \}_{opt} = \arg \max \left( \sum_{i=1}^{N} P_i ( q_i \middle| v_i ) \right) \qquad (6).$$

Hierbei bezeichnet $P_i(q_i|v_i)$ die Einzelleistung der i-ten Turbine für ein Windgeschwindigkeits-Verhältnis $q_i$ unter der Bedingung des zentralen Geschwindigkeitswerts $v_i$ unmittelbar vor der Turbine $T_i$.

In einer Ausführungsform des erfindungsgemäßen Verfahrens wurde ein Quasi-Newton-Optimierungsverfahren für den Windpark der Fig. 1 zur Bestimmung von optimalen Werten für $q_i$ verwendet, wobei ein Windpark mit N = 5 hintereinander angeordneten Turbinen mit äquidistantem Abstand $x/R = 20$ und $\tan\alpha = 0{,}1$ betrachtet wurde. Da die Nachlaufströmung der letzten Turbine $T_N$ keine weitere Turbine mehr beeinflusst, ergibt sich für das Geschwindigkeitsverhältnis $q_N$ der optimale Wert für die Einzelleistung dieser Turbine, nämlich $q_N = 1/3$. Für alle anderen Turbinen i = 1: N-1 sind die entsprechenden Windgeschwindigkeits-Verhältnisse $q_i > 1/3$, d.h. diese Verhältnisse sind immer größer als in der Referenzoptimierung. Fig. 2 zeigt ein Diagramm, welches die einzelnen optimierten Werte $q_i$ der Turbinen $T_1$ bis $T_5$ für die Referenzoptimierung sowie für die Optimierung gemäß der Gleichung (6) zeigt, wobei zum einen die obere Abschätzung $v_{i-1}^* = v_1$ (in Fig. 2 als $q_i^{up}$ bezeichnet) und zum anderen die untere Abschätzung für $v_{i-1}^* = v_{i-1}$ (in Fig. 2 als $q_i^{low}$ bezeichnet) verwendet wurden. Die Referenzoptimierung ist als $q_i^{ref}$ bezeichnet. Wie bereits dargelegt, gilt bei der Referenzoptimierung für alle Werte $q_i$ der einzelnen Turbinen $q_i = 1/3$. Demgegenüber sind für die Optimierungen gemäß Gleichung (6) die Werte für $q_i$ immer größer als 1/3, lediglich der letzte Wert für die Turbine $T_5$ entspricht wieder dem Wert 1/3.

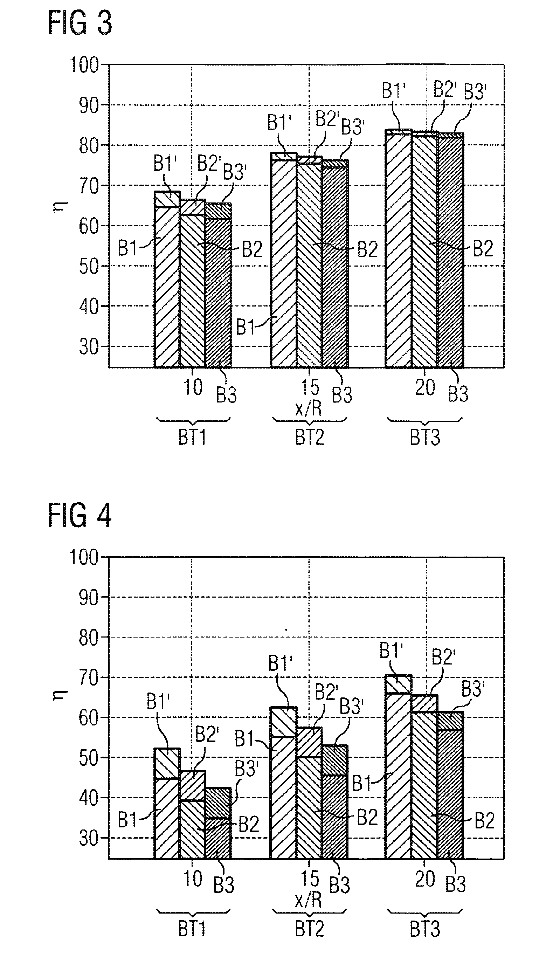

Fig. 3 und Fig. 4 zeigen die berechneten Wirkungsgrade von linearen Windparks mit unterschiedlicher Anzahl an Turbinen, wobei der Wirkungsgrad $\eta$ gegeben ist durch folgende Formel:

$$\eta = P_{tot}\left(q_i, i = 1 : N \middle| v_i\right) / \left(NP\left(q = \frac{1}{3} \middle| v_1\right)\right) \qquad (7).$$

Aus Formel (7) ergibt sich, dass der Wirkungsgrad repräsentiert wird durch die Gesamtleistung der Turbinen im Windpark geteilt durch die Summe der Einzelleistungen der Turbinen im Windpark unter der Bedingung, dass alle Turbinen mit vollem Frontalwind $v_1$ betrieben werden und jede Turbine auf das Windgeschwindigkeits-Verhältnis q = 1/3 eingestellt ist.

In den Fig. 3 und 4 werden jeweils die mit der Referenzoptimierung ermittelten Wirkungsgrade mit den gemäß der Erfindung ermittelten Wirkungsgraden sowohl für die obere Abschätzung $v_{i-1}^* = v_1$ als auch für die untere Abschätzung $v_{i-1}^* = v_{i-1}$ verglichen. In Fig. 3 sind hierbei die Ergebnisse für die obere Abschätzung und in Fig. 4 für die untere Abschätzung wiedergegeben. Man erkennt in Fig. 3 und 4 drei aus Balken bestehende Triplets BT1, BT2 und BT3, wobei jedes Triplet für ein entsprechendes Verhältnis x/R steht. Insbesondere gilt für das Triplet BT1 x/R = 10, für das Triplet BT2 x/R = 15 und für das Triplet BT3 x/R = 20. Die linken Balken $B_1$ bzw. $B_1'$ in einem jeweiligen Triplet zeigen den Wirkungsgrad für die Referenzoptimierung bzw. für die Optimierung gemäß Gleichung (6) für einen Windpark mit N = 5 Turbinen. Die mittleren Balken $B_2$ bzw. $B_2'$ in einem jeweiligen Triplet zeigen den Wirkungsgrad für die Referenzoptimierung bzw. für die Optimierung gemäß Gleichung (6) für einen Windpark mit N = 6 Turbinen. Die rechten Balken $B_3$ bzw. $B_3'$ in einem jeweiligen Triplet zeigen den Wirkungsgrad für die Referenzoptimierung bzw. für die Optimierung nach Gleichung (6) für einen Windpark mit N = 7 Turbinen. Wie man aus Fig. 3 und Fig. 4 erkennt, sind die Wirkungsgrade, welche erfindungsgemäß nach Gleichung (6) ermittelt wurden, d.h. die Wirkungsgrade gemäß den Balken $B_1'$, $B_2'$ und $B_3'$ immer besser als die entsprechenden Wirkungsgrade gemäß der klassischen Referenzoptimierung, welche durch die Balken $B_1$, $B_2$ und $B_3$ wiedergegeben werden. Besonders groß ist diese Verbesserung in Fig. 4 bei Verwendung der unteren Abschätzung $v_{i-1}^* = v_{i-1}$. Gemäß den simulierten Ergebnissen nach Fig. 3 und Fig. 4 ist somit davon auszugehen, dass sich im Realbetrieb eines Windparks deutliche Effizienzsteigerungen ergeben, wenn die Betriebsparameter der einzelnen Turbinen im Hinblick auf eine Maximierung der Gesamtleistung aller Turbinen eingestellt werden.

Wie sich aus Fig. 3 und 4 ergibt, kann mit dem erfindungsgemäßen Verfahren eine Verbesserung der Gesamtleistung um einige Prozent erreicht werden. Bei einem Windpark mit 50 Windturbinen mit einer Leistung von jeweils 2,3 Megawatt, welcher derzeit ungefähr 500 Gigawattstunden pro Jahr erzeugt, wird bereits bei einer Erhöhung der Ausgangsleistung um 1% ein zusätzlicher Gewinn von 500000 EUR erreicht.

**Patentansprüche**

1. Verfahren zum Betrieb eines Windparks mit einer Mehrzahl von Windkraftanlagen ($T_1$, $T_{i-1}$, Ti), wobei der Windpark ein linearer Windpark mit einer oder mehreren parallelen Reihen von hintereinander angeordneten Windkraftanlagen ($T_1$, Ti-$_1$, Ti) ist, bei dem:

während des Betriebs des Windparks Betriebsparameter der Windkraftanlagen ($T_1$, $T_{i-1}$, $T_i$) gemäß einem Optimierungsziel eingestellt werden, wobei das Optimierungsziel der Maximalwert der aus der Summe aller Einzelleistungen ($P_i$) der Windkraftanlagen ($T_1$, $T_{i-1}$, $T_i$) gebildeten Gesamtleistung des Windparks ist,

wobei das Optimierungsziel gegeben ist durch eine Optimierung der Windgeschwindigkeits-Verhältnisse ($q_i$) der Windkraftanlagen ($T_i$, $T_{i-1}$, $T_i$) , wobei das Windgeschwindigkeits-Verhältnis einer jeweiligen Windkraftanlage ($T_1$, $T_{i-1}$, $T_i$) gegeben ist durch das Verhältnis der zentralen Windgeschwindigkeit unmittelbar nach der jeweiligen Windkraftanlage ($T_1$, $T_{i-1}$, $T_i$) zu der zentralen Windgeschwindigkeit ($v_i$) unmittelbar vor der jeweiligen Windkraftanlage ($T_1$, $Ti_{-1}$, $T_i$),

wobei das Optimierungsziel bei vorgegebener Windgeschwindigkeit ($v_1$) parallel zu den Reihen von hintereinander angeordneten Windkraftanlagen ($T_1$, $T_{i-1}$, $T_i$) durch die Maximalleistungen der Reihen von hintereinander angeordneten Windkraftanlagen ($T_1$, $T_{i-1}$, $T_i$) gegeben ist,

wobei die Maximalleistung einer jeweiligen Reihe von hintereinander angeordneten Windkraftanlagen ($T_i$, $T_{i-1}$, $T_i$) durch Optimierung der Windgeschwindigkeits-Verhältnisse ($q_i$) der jeweiligen Windkraftanlagen ($T_1$, $T_{i-1}$, $T_i$) einer Reihe gemäß folgender Gleichung bestimmt wird:

$$\{q_i\}_{opt} = \arg\max\left(\sum_{i=1}^{N} P_i\left(q_i|v_i\right)\right)$$

wobei N die Anzahl von Windkraftanlagen ($T_1$, $T_{i-1}$, $T_i$) in einer Reihe ist und die Windkraftanlagen ($T_1$, $T_{i-1}$, $T_i$) in einer Reihe in Windrichtung in aufsteigender Reihenfolge nummeriert sind;

wobei $q_i$ das Verhältnis der zentralen Windgeschwindigkeit unmittelbar nach der i-ten Windkraftanlage zur zentralen Windgeschwindigkeit $v_i$ unmittelbar vor der i-ten Windkraftanlage ist;

wobei $P_i(q_i|v_i)$ die Einzelleistung der i-ten Windkraftanlage in Abhängigkeit von dem Windgeschwindigkeits-Verhältnis $q_i$ bei gegebener zentraler Windgeschwindigkeit $v_i$ unmittelbar vor der i-ten Windkraftanlage ist.

2. Verfahren nach Anspruch 1, bei dem die Betriebsparameter, welche gemäß dem Optimierungsziel eingestellt werden, die jeweiligen Neigungswinkel der Rotorblätter der einzelnen Windkraftanlagen ($T_1$, $T_{i-1}$, $T_i$) umfassen.

3. Verfahren nach Anspruch 2, bei dem während des Betriebs des Windparks die jeweiligen Einzelleistungen ($P_i$) der Windkraftanlagen ($T_1$, $T_{i-1}$, $T_i$) erfasst werden und die Neigungswinkel der Rotorblätter in Rückkopplung mit den erfassten Einzelleistungen ($P_i$) gemäß dem Optimierungsziel eingestellt werden.

4. Verfahren nach einem der vorhergehenden Ansprüche, bei dem das Windgeschwindigkeits-Verhältnis ($q_i$) einer jeweiligen Windkraftanlage ($T_1$, $T_{i-1}$, $T_i$) über den Neigungswinkel der Rotorblätter der jeweiligen Windkraftanlage ($T_1$, $T_{i-1}$, $T_i$) eingestellt wird.

5. Verfahren nach einem der vorhergehenden Ansprüche, bei dem $P_i(q_i|v_i)$ durch folgende Gleichung gegeben ist:

$$P_i\left(q_i|v_i\right) = \frac{\rho}{2}\pi R^2 v_i^3 \frac{(1+q_i)(1-q_i^2)}{2}$$

wobei p die Luftdichte ist und R der Radius des Rotors (RO) der i-ten Windkraftanlage ($T_1$, $T_{i-1}$, $T_i$) ist und wobei $v_i$ die zentrale Windgeschwindigkeit unmittelbar vor der i-ten Windkraftanlage ist.

6. Verfahren nach Anspruch 5, bei dem die zentrale Windgeschwindigkeit $v_i$ unmittelbar vor der i-ten Windkraftanlage mit Hilfe folgender Formel bestimmt wird:

$$\pi\left(\left(R + x\tan\alpha\right)^2 - R^2\right)v_{i-1}^{*} + \pi R^2 q_{i-1}v_{i-1} = \pi\left(R + x\tan\alpha\right)^2 v_i, \qquad (i \geq 2)$$

wobei R der Radius des Rotors (RO) der (i-1)-ten Windkraftanlage ist;
wobei x der Abstand der (i-1)-ten Windkraftanlage zur i-ten Windkraftanlage ist;
wobei $v^*_{i-1}$ die periphere Windgeschwindigkeit am Rand des Rotors (RO) der (i-1)-ten Windkraftanlage ist;
wobei $\alpha$ der Neigungswinkel der Nachlaufströmung der (i-1)-ten Windkraftanlage ist.

7.  Verfahren nach Anspruch 6, bei dem die periphere Windgeschwindigkeit $v^*_{i-1}$ durch einen Wert abgeschätzt wird, der zwischen der zentralen Windgeschwindigkeit $v_{i-1}$ unmittelbar vor der (i-1)-ten Windkraftanlage und der zentralen Windgeschwindigkeit $v_1$ unmittelbar vor der ersten Windkraftanlage liegt.

8.  Verfahren nach einem der vorhergehenden Ansprüche, bei dem die Betriebsparameter gemäß dem Optimierungsziel mit Hilfe eines numerischen Verfahrens, insbesondere eines Gradientenverfahrens, bestimmt werden.

9.  Verfahren nach einem der vorhergehenden Ansprüche, bei dem für eine vorgegebene Anzahl an Referenz-Windbedingungen die Betriebsparameter gemäß dem Optimierungsziel vorgegeben werden.

10. Verfahren nach Anspruch 9, bei dem die Einstellung der Betriebsparameter auf der Basis künstlicher Intelligenz erfolgt, insbesondere auf der Basis eines künstlichen neuronalen Netzes und/oder eines probabilistischen Netzes, welche mit Hilfe der Betriebsparameter für die vorgegebene Anzahl an Referenz-Windbedingungen gelernt werden.

11. Vorrichtung zum Betrieb eines Windparks mit einer Mehrzahl von Windkraftanlagen ($T_1$, $T_{i-1}$, $T_i$), wobei der Windpark ein linearer Windpark mit einer oder mehreren parallelen Reihen von hintereinander angeordneten Windkraftanlagen (T1, Ti-1, Ti) ist, umfassend eine Steuereinheit (S) zum Einstellen von Betriebsparametern der Windkraftanlagen ($T_1$, $T_{i-1}$, $T_i$) in Abhängigkeit von einem Optimierungsziel, wobei das Optimierungsziel der Maximalwert der aus der Summe aller Einzelleistungen ($P_i$) der Windkraftanlagen ($T_1$, $T_{i-1}$, $T_i$) gebildeten Gesamtleistung des Windparks ist, wobei das Optimierungsziel gegeben ist durch eine Optimierung der Windgeschwindigkeits-Verhältnisse ($q_i$) der Windkraftanlagen ($T_1$, $T_{i-1}$, $T_i$), wobei das Windgeschwindigkeits-Verhältnis einer jeweiligen Windkraftanlage ($T_1$, $T_{i-1}$, $T_i$) gegeben ist durch das Verhältnis der zentralen Windgeschwindigkeit unmittelbar nach der jeweiligen Windkraftanlage ($T_1$, $T_{i-1}$, $T_i$) zu der zentralen Windgeschwindigkeit ($v_i$) unmittelbar vor der jeweiligen Windkraftanlage ($T_1$, $T_{i-1}$, $T_i$),
wobei das Optimierungsziel bei vorgegebener Windgeschwindigkeit ($v_1$) parallel zu den Reihen von hintereinander angeordneten Windkraftanlagen ($T_1$, $T_{i-1}$, $T_i$) durch die Maximalleistungen der Reihen von hintereinander angeordneten Windkraftanlagen ($T_1$, $T_{i-1}$, $T_i$) gegeben ist,
wobei die Maximalleistung einer jeweiligen Reihe von hintereinander angeordneten Windkraftanlagen ($T_1$, $T_{i-1}$, $T_i$) durch Optimierung der Windgeschwindigkeits-Verhältnisse ($q_i$) der jeweiligen Windkraftanlagen ($T_1$, $T_{i-1}$, $T_i$) einer Reihe gemäß folgender Gleichung bestimmt wird:

$$\{q_i\}_{opt} = \arg\max\left(\sum_{i=1}^{N} P_i\big(q_i | v_i\big)\right)$$

wobei N die Anzahl von Windkraftanlagen ($T_1$, $T_{i-1}$, $T_i$) in einer Reihe ist und die Windkraftanlagen ($T_1$, $T_{i-1}$, $T_i$) in einer Reihe in Windrichtung in aufsteigender Reihenfolge nummeriert sind;
wobei $q_i$ das Verhältnis der zentralen Windgeschwindigkeit unmittelbar nach der i-ten Windkraftanlage zur zentralen Windgeschwindigkeit $v_i$ unmittelbar vor der i-ten Windkraftanlage ist;
wobei $P_i(q_i|v_i)$ die Einzelleistung der i-ten Windkraftanlage in Abhängigkeit von dem Windgeschwindigkeits-Verhältnis $q_i$ bei gegebener zentraler Windgeschwindigkeit $v_i$ unmittelbar vor der i-ten Windkraftanlage ist.

12. Vorrichtung nach Anspruch 11, welche derart ausgestaltet ist, dass der Windpark mit einem Verfahren nach einem der Ansprüche 2 bis 10 betreibbar ist.

13. Vorrichtung nach Anspruch 11 oder 12, umfassend ein Netz, insbesondere ein drahtgebundenes und/oder drahtloses Netz, über das die Steuereinheit (S) mit den Windkraftanlagen ($T_1$, $T_{i-1}$, $T_i$) verbunden ist, wobei über das Netz Steuerbefehle zur Einstellung der Betriebsparameter der Windkraftanlagen ($T_1$, $T_{i-1}$, $T_i$) an die Windkraftanlagen ($T_1$, $T_{i-1}$, $T_i$) übertragen werden.

**14.** Vorrichtung nach Anspruch 13, wobei über das Netz Werte der Einzelleistungen ($P_i$) der Windkraftanlagen ($T_1$, $T_{i-1}$, $T_i$) an die Steuereinheit (S) gemeldet werden.

**15.** Windpark mit einer Mehrzahl von Windkraftanlagen ($T_1$, $T_{i-1}$, $T_i$), umfassend eine Vorrichtung nach einem der Ansprüche 11 bis 14.

**Claims**

**1.** Method for operating a wind farm comprising a plurality of wind turbines ($T_1$ $T_{i-1}$, $T_i$), wherein the wind farm is a linear wind farm comprising one or more parallel rows of wind turbines ($T_1$ $T_{i-1}$, $T_i$) arranged one behind the other, in which:

operating parameters of the wind turbines ($T_1$ $T_{i-1}$, $T_i$) are adjusted during operation of the wind farm according to an optimization goal, the optimization goal being the maximum value of the total output of the wind farm produced from the sum of all individual outputs ($P_i$) of the wind turbines ($T_1$, $T_{i-1}$, $T_i$),
wherein the optimization goal is given by an optimization of the wind speed ratios ($q_i$) of the wind turbines ($T_1$, $T_{i-1}$, $T_i$), the wind speed ratio of a respective wind turbine ($T_1$, $T_{i-1}$, $T_i$) being given by the ratio of the central wind speed immediately downstream of the respective wind turbine ($T_1$, $T_{i-1}$, $T_i$) to the central wind speed ($v_i$) immediately upstream of the respective wind turbine ($T_1$, $T_{i-1}$, $T_i$),
wherein the optimization goal in the case of a predefined wind speed ($v_i$) parallel to the rows of wind turbines ($T_1$, $T_{i-1}$, $T_i$) arranged one behind the other is given by the maximum outputs of the rows of wind turbines ($T_1$, $T_{i-1}$, $T_i$) arranged one behind the other,
wherein the maximum output of a respective row of wind turbines ($T_1$, $T_{i-1}$, $T_i$ arranged one behind the other is determined by optimization of the wind speed ratios ($q_i$) of the respective wind turbines ($T_1$, $T_{i-1i}$, $T_i$) of a row according to the following equation:

$$\{q_i\}_{opt} = \arg\max\left( \sum_{i=1}^{N} P_i\big(q_i\big|v_i\big) \right)$$

where N is the number of wind turbines ($T_1$, $T_{i-1}$, $T_i$) in a row and the wind turbines ($T_1$, $T_{i-1}$, $T_i$) in a row are numbered in ascending order in the wind direction;
where $q_i$ is the ratio of the central wind speed immediately downstream of the i-th wind turbine to the central wind speed $v_i$ immediately upstream of the i-th wind turbine;
where $P_i(q_i|v_i)$ is the individual output of the i-th wind turbine as a function of the wind speed ratio $q_i$ in the case of a given central wind speed $v_i$ immediately upstream of the i-th wind turbine.

**2.** Method according to claim 1, wherein the operating parameters, which are adjusted according to the optimization goal, incorporate the respective angles of inclination of the rotor blades of the individual wind turbines ($T_1$ $T_{i-1}$, $T_i$).

**3.** Method according to claim 2, wherein the respective individual outputs ($P_i$) of the wind turbines ($T_{1f}$ $T_{i-1}$, $T_i$) are detected during operation of the wind farm and the angles of inclination of the rotor blades are adjusted in response to the detected individual outputs ($P_i$) and according to the optimization goal.

**4.** Method according any one of the preceding claims,
wherein the wind speed ratio ($q_i$) of a respective wind turbine ($T_1$, $T_{i-1}$, $T_i$) is adjusted using the angle of inclination of the rotor blades of the respective wind turbine ($T_1$, $T_{i-1}$, $T_i$).

**5.** Method according to any one of the preceding claims, wherein Pi($q_i$ |$v_i$) is given by the following equation:

$$P_i\left(q_i\middle|v_i\right)=\frac{\rho}{2}\pi R^2 v_i^3\frac{\left(1+q_i\right)\left(1-q_i^2\right)}{2}$$

where $\rho$ is the air density and R the radius of the rotor (RO) of the i-th wind turbine ($T_1$, $T_{i-1}$, $T_i$) and where $v_i$ is the central wind speed immediately upstream of the i-th wind turbine.

6. Method according to claim 5, wherein the central wind speed $v_i$ immediately upstream of the i-th wind turbine is determined with the aid of the following formula:

$$\pi\left(\left(R+x\tan\alpha\right)^2-R^2\right)v_{i-1}^*+\pi R^2 q_{i-1}v_{i-1}=\pi\left(R+x\tan\alpha\right)^2 v_i,\qquad\left(i\geq 2\right)$$

where R is the radius of the rotor (RO) of the (i-1)th wind turbine;
where x is the spacing of the (i-1)th wind turbine from the i-th wind turbine;
where $v_{i-1}^*$ is the peripheral wind speed at the edge of the rotor (RO) of the (i-1)th wind turbine;
where $\alpha$ is the angle of inclination of the slipstream of the (i-1)th wind turbine.

7. Method according to claim 6, wherein the peripheral wind speed $v_{i-1}^*$ is estimated by a value which lies between the central wind speed $v_{i-1}^*$ immediately upstream of the (i-1)th wind turbine and the central wind speed $v_1$ immediately upstream of the first wind turbine.

8. Method according to any one of the preceding claims, wherein the operating parameters according to the optimization goal are determined with the aid of a numerical method, in particular a gradient method.

9. Method according to any one of the preceding claims, wherein the operating parameters are predefined according to the optimization goal for a predefined number of reference wind conditions.

10. Method according to claim 9, wherein the operating parameters are adjusted on the basis of artificial intelligence, in particular on the basis of an artificial neuronal network and/or a probabilistic network, which are learned with the aid of the operating parameters for the predefined number of reference wind conditions.

11. Device for operating a wind farm comprising a plurality of wind turbines ($T_1$, $T_{i-1}$, $T_i$) , wherein the wind farm is a linear wind farm comprising one or more parallel rows of wind turbines ($T_{1f}$ $T_{i-1}$, $T_i$) arranged one behind the other, incorporating a control unit (S) for adjusting operating parameters of the wind turbines ($T_1$ $T_{i-1}$, $T_i$) as a function of an optimization goal, the optimization goal being the maximum value of the total output of the wind farm produced from the sum of all individual outputs ($P_i$) of the wind turbines ($T_1$, $T_{i-1}$, $T_i$), wherein the optimization goal is given by an optimization of the wind speed ratios ($q_i$) of the wind turbines ($T_{1f}$ $T_{i-1}$, $T_i$), the wind speed ratio of a respective wind turbine ($T_1$, $T_{i-1}$, $T_i$) being given by the ratio of the central wind speed immediately downstream of the respective wind turbine ($T_{1f}$ $T_{i-1}$, $T_i$) to the central wind speed ($v_i$) immediately upstream of the respective wind turbine ($T_{1f}$ $T_{i-1}$, $T_i$), wherein the optimization goal in the case of a predefined wind speed ($v_i$) parallel to the rows of wind turbines ($T_{1f}$ $T_{i-1}$, $T_i$) arranged one behind the other is given by the maximum outputs of the rows of wind turbines ($T_{1f}$ $T_{i-1}$, $T_i$) arranged one behind the other,
wherein the maximum output of a respective row of wind turbines ($T_1$, $T_{i-1}$, $T_d$ arranged one behind the other is determined by optimization of the wind speed ratios ($q_i$) of the respective wind turbines ($T_1$, $T_{i1}$, $T_i$) of a row according to the following equation:

$$\left\{q_i\right\}_{opt}=\arg\max\left(\sum_{i=1}^{N}P_i\left(q_i\middle|v_i\right)\right)$$

where N is the number of wind turbines ($T_1$, $T_{i-1}$, $T_i$) in a row and the wind turbines ($T_1$, $T_{i-1}$, $T_i$) in a row are numbered in ascending order in the wind direction;

where $q_i$ is the ratio of the central wind speed immediately downstream of the i-th wind turbine to the central wind speed $v_i$ immediately upstream of the i-th wind turbine;

where $P_i(q_i| v_i)$ is the individual output of the i-th wind turbine as a function of the wind speed ratio $q_i$ in the case of a given central wind speed $v_i$ immediately upstream of the i-th wind turbine.

**12.** Device according to claim 11, which is configured in such a way that the wind farm can be operated with a method according to any one of claims 2 to 10.

**13.** Device according to claim 11 or 12, comprising a network, in particular a wired and/or wireless network, via which the control unit (S) is connected to the wind turbines ($T_1$, $T_{i-1}$, $T_i$), control commands for adjusting the operating parameters of the wind turbines ($T_1$, $T_{i-1}$, $T_i$) being transmitted to the wind turbines ($T_1$, $T_{i-1}$, $T_i$) via the network.

**14.** Device according to claim 13, wherein values of the individual outputs ($P_i$) of the wind turbines ($T_1$, $T_{i-1}$, $T_i$) are communicated to the control unit (S) via the network.

**15.** Wind farm comprising a plurality of wind turbines ($T_1$, $T_{i-1}$, $T_i$), incorporating a device according to any one of claims 11 to 14.


**Revendications**

**1.** Procédé permettant de faire fonctionner un parc éolien comprenant une pluralité d'éoliennes ($T_1$, $T_{i-1}$, $T_i$), le parc éolien étant un parc éolien linéaire avec une ou plusieurs rangées parallèles d'éoliennes ($T_1$, $T_{i-1}$, $T_i$) disposées les unes derrière les autres, dans lequel :

pendant le fonctionnement du parc éolien, des paramètres de fonctionnement des éoliennes ($T_1$, $T_{i-1}$, $T_i$) sont réglés conformément à un objectif d'optimisation, l'objectif d'optimisation étant la valeur maximale de la puissance totale du parc éolien formée par la somme de toutes les puissances individuelles ($P_i$) des éoliennes ($T_1$, $T_{i-1}$, $T_i$),

l'objectif d'optimisation étant donné par une optimisation des rapports de vitesses de vent ($q_i$) des éoliennes ($T_1$, $T_{i-1}$, $T_i$), le rapport de vitesses de vent d'une éolienne respective ($T_1$, $T_{i-1}$ $T_i$) étant donné par le rapport de la vitesse de vent centrale immédiatement après l'éolienne respective ($T_1$, $T_{i-1}$ $T_i$) à la vitesse de vent centrale ($v_i$) immédiatement avant l'éolienne respective ($T_1$, $T_{i-1}$ $T_i$),

l'objectif d'optimisation, pour une vitesse de vent prédéfinie ($v_1$) parallèle aux rangées d'éoliennes ($T_1$, $T_{i-1}$ $T_i$) disposées les unes derrière les autres, étant donné par la puissance maximale des rangées d'éoliennes ($T_1$, $T_{i-1}$ $T_i$) disposées les unes derrière les autres,

la puissance maximale d'une rangée respective d'éoliennes ($T_1$, $T_{i-1}$ $T_i$) disposées les unes derrière les autres étant déterminée par optimisation des rapports de vitesses de vent ($q_i$) des éoliennes respectives ($T_1$, $T_{i-1}$ $T_i$) d' une rangée, selon l'équation suivante :

$$\{q_i\}_{opt} = \arg\max\left(\sum_{i=1}^{N} P_i\big(q_i|v_i\big)\right)$$

où N est le nombre d'éoliennes ($T_1$, $T_{i-1}$, $T_i$) dans une rangée, les éoliennes ($T_1$, $T_{i-1}$, $T_i$) dans une rangée étant numérotées dans le sens du vent par ordre croissant ;

où $q_i$ est le rapport de la vitesse de vent centrale immédiatement après la i-ième éolienne à la vitesse de vent centrale $v_i$ immédiatement avant la i-ième éolienne ;

où $P_i(q_i | v_i)$ est la puissance individuelle de la i-ième éolienne en fonction du rapport de vitesses de vent $q_i$ pour une vitesse de vent centrale donnée $v_i$ immédiatement avant la i-ième éolienne.

**2.** Procédé selon la revendication 1, dans lequel les paramètres de fonctionnement, réglés conformément à l'objectif d'optimisation, comprennent les angles d'inclinaison respectifs des pales de rotor des différentes éoliennes ($T_1$ $T_{i-1}$

$T_i$).

3. Procédé selon la revendication 2, dans lequel, pendant le fonctionnement du parc éolien, les différentes puissances individuelles ($P_i$) des éoliennes sont détectées et les angles d'inclinaison des pales de rotor sont réglés, en réaction aux puissances individuelles détectées ($P_i$), conformément à l'objectif d'optimisation.

4. Procédé selon l'une des revendications précédentes, dans lequel le rapport de vitesses de vent ($q_i$) d'une éolienne respective ($T_1$, $T_{i-1}$ $T_i$) est réglé via l'angle d'inclinaison des pales de rotor de l'éolienne respective ($T_1$, $T_{i-1}$ $T_i$).

5. Procédé selon l'une des revendications précédentes, dans lequel $P_i(q_i|v_i)$ est donné par l'équation suivante :

$$P_i\left(q_i\middle|v_i\right) = \frac{\rho}{2}\pi R^2 v_i^3 \frac{\left(1+q_i\right)\left(1-q_i^2\right)}{2}$$

où $\rho$ est la densité atmosphérique et R le rayon du rotor (RO) de la i-ième éolienne ($T_1$, $T_{i-1}$, $T_i$), $v_i$ étant la vitesse de vent centrale immédiatement avant la i-ième éolienne.

6. Procédé selon la revendication 5, dans lequel la vitesse de vent centrale $v_i$ immédiatement avant la i-ième éolienne est déterminée à l'aide de la formule suivante :

$$\pi\left(\left(R + x\tan\alpha\right)^2 - R^2\right)v_{i-1}^* + \pi R^2 q_{i-1}v_{i-1} = \pi\left(R + x\tan\alpha\right)^2 v_i, \qquad \left(i \geq 2\right)$$

où R est le rayon du rotor (RO) de la i-ième éolienne ;

où x est la distance de la (i-1)ième éolienne par rapport à la i-ième éolienne ;
où $v_{i-1}^*$ est la vitesse de vent périphérique au bord du rotor (RO) de la (i-1) ième éolienne ;
où $\alpha$ est l'angle d'inclinaison du sillage de la (i-1)ième éolienne.

7. Procédé selon la revendication 6, dans lequel la vitesse de vent périphérique $v_{i-1}^*$ est estimée par une valeur située entre la vitesse de vent centrale $v_{i-1}$, immédiatement avant la (i-1)ième éolienne et la vitesse de vent centrale $v_1$ immédiatement avant la première éolienne.

8. Procédé selon l'une des revendications précédentes, dans lequel les paramètres de fonctionnement conformes à l'objectif d'optimisation sont déterminés en utilisant une méthode numérique, en particulier une méthode à gradients.

9. Procédé selon l'une des revendications précédentes, dans lequel les paramètres de fonctionnement conformes à l'objectif d'optimisation sont prédéfinis pour un nombre prédéfini de conditions de vent de référence.

10. Procédé selon la revendication 9, dans lequel le réglage des paramètres de fonctionnement est effectué sur la base de l'intelligence artificielle, en particulier sur la base d'un réseau neuronal artificiel et/ou d'un réseau probabiliste, soumis à un apprentissage à l'aide des paramètres de fonctionnement pour le nombre prédéfini de conditions de vent de référence.

11. Dispositif permettant de faire fonctionner un parc éolien comprenant une pluralité d'éoliennes ($T_1$, $T_{i-1}$, $T_i$), le parc éolien étant un parc éolien linéaire avec une ou plusieurs rangées parallèles d'éoliennes ($T_1$, $T_{i-1}$, $T_i$) disposées les unes derrière les autres, comprenant une unité de commande (S) pour régler des paramètres de fonctionnement des éoliennes ($T_1$, $T_{i-1}$, $T_i$) en fonction d'un objectif d'optimisation, l'objectif d'optimisation étant la valeur maximale de la puissance totale du parc éolien formée par la somme de toutes les puissances individuelles ($P_i$) des éoliennes

$(T_1, T_{i-1}, T_i)$,

l'objectif d'optimisation étant donné par une optimisation des rapports de vitesses de vent $(q_i)$ des éoliennes $(T_1, T_{i-1}, Ti)$, le rapport de vitesses de vent d'une éolienne respective $(T_1, T_{i-1}, T_i)$ étant donné par le rapport de la vitesse de vent centrale immédiatement après l'éolienne respective $(T_1, T_{i-1}, T_i)$ à la vitesse de vent centrale $(v_i)$ immédiatement avant l'éolienne respective $(T_1, T_{i-1}, T_i)$,

l'objectif d'optimisation, pour une vitesse de vent prédéfinie $(v_1)$ parallèle aux rangées d'éoliennes $(T_1, T_{i-1}, T_i)$ disposées les unes derrière les autres, étant donné par la puissance maximale des rangées d'éoliennes $(T_1, T_{i-1} T_i)$ disposées les unes derrière les autres,

la puissance maximale d'une rangée respective d'éoliennes $(T_1, T_{i-1}, T_i)$ disposées les unes derrière les autres étant déterminée par optimisation des rapports de vitesses de vent $(q_i)$ des éoliennes respectives $(T_1, T_{i-1}, T_i)$ d'une rangée, selon l'équation suivante :

$$\{q_i\}_{opt} = \arg\max\left(\sum_{i=1}^{N} P_i\big(q_i\big|v_i\big)\right)$$

où N est le nombre d'éoliennes $(T_1, T_{i-1}, T_i)$ dans une rangée, et les éoliennes $(T_1, T_{i-1}, T_i)$ dans une rangée étant numérotées dans le sens du vent par ordre croissant ;

où $q_i$ est le rapport de la vitesse de vent centrale immédiatement après la i-ième éolienne à la vitesse de vent centrale $v_i$ immédiatement avant la i-ième éolienne ;

où $P_i$ ($q_i|v_d$ est la puissance individuelle de la i-ième éolienne en fonction du rapport de vitesses de vent $q_i$ pour une vitesse de vent centrale donnée $v_i$ immédiatement avant la i-ième éolienne.

**12.** Dispositif selon la revendication 11, configuré pour faire fonctionner le parc éolien avec un procédé selon l'une des revendications 2 à 10.

**13.** Dispositif selon la revendication 11 ou 12, comprenant un réseau, en particulier un réseau filaire et/ou sans fil, via lequel l'unité de commande (S) est reliée aux éoliennes $(T_1, T_{i-1} T_i)$, sur ledit réseau étant transmises aux éoliennes $(T_1, T_{i-1} T_i)$, des instructions de commande permettant le réglage des paramètres de fonctionnement des éoliennes $(T_1, T_{i1}, T_i)$.

**14.** Dispositif selon la revendication 13, sur ledit réseau étant communiquées à l'unité de commande (S), des valeurs des puissances individuelles $(P_i)$ des éoliennes $(T_1, T_{i-1} T_i)$.

**15.** Parc éolien comprenant une pluralité d'éoliennes $(T_1, T_{i-1}, T_i)$, comportant un dispositif selon l'une des revendications 11 à 14.

FIG 1

$S$

$T1$

$V_1$

$R0$

$\cdots$

$x\tan\alpha$

$R$ $R0$

$V_{i-1}$ $q_{i-1}V_{i-1}$ $V_i$

$T_{i-1}$

$T_i$

$R0$

$\alpha$

$x$

$\cdots$

FIG 2

$q_i^{low}$

$q_i^{up}$

$q_i = 1/3$

$q_i^{ref}$

## FIG 3

## FIG 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102005033229 A1
- WO 03008802 A1
- EP 1672778 A2
- EP 1739824 A2
- US 20070090651 A1